# EUROPEAN PATENT SPECIFICATION

(11) **EP 0 478 183 B1**
(45) Date of publication and mention of the grant of the patent: **22.05.1996**
(21) Application number: 91308370.5
(22) Date of filing: 13.09.1991
(51) Int. Cl.: H04N 9/79

(54) **Audio signal recording apparatus and methods for use with VTRs**
Aufzeichnungsgerät für Tonsignale und Verfahren zur Verwendung mit Videobandgeräten
Dispositif d'enregistrement d'un signal audio et méthodes pour l'utilisation avec des magnétoscopes

(30) Priority: 14.09.1990 JP 245111/90
(43) Date of publication of application: 01.04.1992
(73) Proprietor: SONY CORPORATION, Tokyo 141 (JP)
(72) Inventor: Fukumoto, Kenji, c/o Patents Division, Shinagawa-ken, Tokyo 141 (JP); Okamoto, Ichiro, c/o Patents Division, Shinagawa-ken, Tokyo 141 (JP); Yamashita, Keitaro, c/o Patents Division, Shinagawa-ken, Tokyo 141 (JP)
(74) Representative: Harris, Ian Richard

(56) References cited:
- DE-A- 3 918 454
- US-A- 4 751 590
- PROCEEDINGS OF THE ANNUAL CONFERENCE ON VIDEO, AUDIO AND DATA RECORDING 24 April 1990, ; IEE , LONDON ,GB pages 93 - 100 , XP218942 SASAKI, OHTSU, CHIBA, BANNAI ET. AL. '1/2 -INCH VIDEO CASSETTE RECORDER FOR BASEBAND HDTV'

## Description

This invention relates to audio signal recording apparatus and methods for use with video tape recorders (VTRs).

Some VTRs record and reproduce high definition television (HDTV) signals of wideband, high frequency types. These VTRs record an HDTV signal in units of time (for example over one field) by dividing it into a plurality of serpents in a plurality of channels. The purpose of this method is to lower the frequency of the recorded signal and to narrow the frequency band thereof.

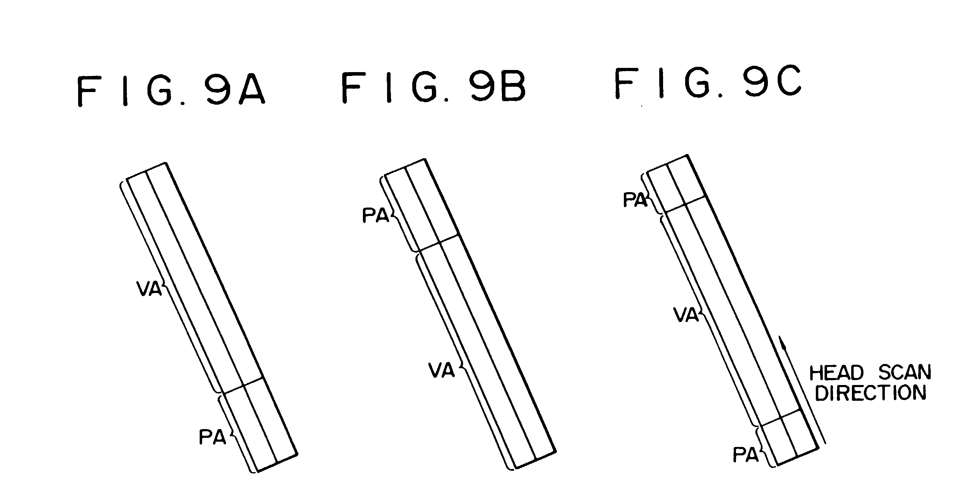

Figure 7 shows a typical rotating head device for use with such a method. An A channel head 1A having a first azimuth and a B channel head 1B having a second azimuth different from the first are located at the same rotational angle position of a rotating drum 3, the heads 1A and 1B being one track width apart in the rotating axis direction. Likewise, another A channel head 2A having the first azimuth and another B channel head 2B having the second azimuth are located at a rotational angle position of a rotating drum 3, the heads 1A and 1B being one track width apart in the rotating axis direction. Likewise, another A channel head 2A having the first azimuth and another B channel head 2B having the second azimuth are located at a rotational angle position 180 degrees away from that of the heads 1A and 1B, the heads 2A and 2B also being one track width apart in the rotating axis direction of the drum 3. A magnetic tape 4 is wound obliquely around the drum 3 within a 180-degree-plus angular range. The heads 1A, 1B, 2A and 2B are rotated at a rotary speed of 60 Hz.

In this rotating head device, one pair of rotating heads 1A, 1B and the other pair of rotating heads 2A, 2B alternately record the HDTV signal in oblique recording tracks shown in Figure 8 on the tape 4, each pair recording the signal over a tape contact segment corresponding to a 180-degree rotation angle.

More specifically, the first half of one rotation of the drum 3 is a 180-degree rotation during which the heads 1A and 1B contact the tape 4. During the half rotation, the heads 1A and 1B simultaneously form an A channel track TA1 and a B channel track TB1. During the second 180-degree rotation of the drum 3, the heads 2A and 2B simultaneously form an A channel track TA2 and a B channel track TB2. These operations are alternated by the two pairs of rotating heads. In the above process, two tracks formed simultaneously by each pair of rotating heads, 1A and 1B or 2A and 2B, constitute one segment. Recorded in this one segment is a signal comprising a half-field video signal and a corresponding half-field PCM audio signal. Four tracks, TA1, TB1, TA2 and TB2, are used to record one signal field, and four segments are employed to record one signal frame.

When HDTV signals are to be recorded with the VTR, the video signal is recorded in an analogue format comprising a luminance signal and two colour difference signals, and the audio signal is recorded as a PCM signal in a digital format over four channels each representing sixteen bits of audio data. On the tape 4, the video and audio signals are accommodated in different recording areas arranged longitudinally.

In the above set-up, experience has shown that providing a plurality of video signal recording areas per track complicates video signal processing. If the video signal recording area is not to be divided, there are three ways of establishing video and audio signal recording areas per track, as shown in Figures 9A, 9B and 9C. In the figures, VA is a video signal recording area and PA is a PCM audio signal recording area.

In the arrangement of Figure 9A, a PCM audio signal recording area PA is located at the start of each of the tracks TA1, TB1, TA2 and TB2 scanned by the heads 1A, 1B, 2A and 2B, respectively. In the arrangement of Figure 9B, a PCM audio signal recording area is located at the end of each track scanned by each head. In the arrangement of Figure 9C, two PCM audio signal recording areas are located at the start and end of each track scanned by each head.

In each of the cases where a PCM audio signal recording area PA is located at the start and/or end of each head-scanned track, the head scan starting or ending part of any track is vulnerable to scratches or other damage because of its location. The damage tends to produce drop-outs in the reproduced signal. Because the head scan start part of the tape is a part where a head starts contacting the tape, a snug contact has yet to be achieved between head and tape. This can cause the RF reproduction output to fluctuate and can lead to signal drop-outs. This problem is more likely to occur the closer the position of contact to a longitudinal edge of the tape.

Where the audio signal is recorded in PCM signal format, a so-called interleaving process is provided besides the addition of error correction codes to the audio signal as described for example in DE-A-3918454. The interleaving process generally involves distributing PCM audio data samples within recording areas according to a predetermined set of rules. When recorded, the audio signal on each channel is distributed to two tracks of each segment. In an interleaving set-up, if the data from one of the two tracks contain a signal drop-out that cannot be corrected by an error correction code, another sample left intact near the dropped sample is interpolated so as approximately to reconstruct the missing audio signal for reproduction.

However, the signal reconstruction through interpolation inevitably involves some degree of degradation in sound quality. The greater the magnitude of signal drop-out, the more pronounced the sound quality degradation.

If audio signals on all four channels are recorded in this manner under the same conditions, all the reproduced signals will suffer from the above-described draw-backs.

According to the present invention as claimed there is provided an audio signal recording method for use with video tape recorders, said method comprising the steps of:
having a plurality of rotating heads simultaneously scan a tape consecutively to form as many oblique recording tracks on said tape as said plurality of rotating heads with no guard band between said tracks, said plurality of oblique recording tracks constituting one segment;
recording, for each segment, a video signal corresponding to unit time in a video signal recording area; and
recording, for each segment, the PCM audio signal of at least four channels corresponding to said video signal in an audio signal recording area separate from said video signal recording area;
said video and said audio signals being recorded in the longitudinal direction of each of said recording tracks;
said PCM audio signals of at least four channels being clustered into a plurality of groups each associated with a plurality of channels;
said audio signal recording area being divided into as many areas as said plurality of channel groups in the longitudinal direction of each of said tracks; and
the audio data for each of said channel groups being recorded in a distributed manner across said plurality of oblique recording tracks of each segment;
wherein said plurality of channel groups are each given a priority in the order of their importance, the channel group of the highest priority being assigned to the recording area located farthest from the longitudinal ends of each of said oblique recording tracks.

According to the present invention as claimed there is also provided an audio signal recording apparatus for recording main PCM audio signals, sub PCM audio signals and video signals, said apparatus comprising:
a video signal processing circuit for processing incoming video signals into suitable signal form for recording;
a main audio PCM processing circuit for processing incoming main audio signals into said main PCM audio signals;
a sub audio PCM processing circuit for processing said incoming sub audio signals into said sub PCM audio signals; and
rotary magnetic head means for recording oblique recording tracks on a video tape;
wherein said main PCM audio signals are positioned between said video signals and said sub PCM audio signals of each of the recording tracks.

Embodiments of the present invention can provide an audio signal recording apparatus and method for minimizing the degradation of audio signals on primary channels when audio signals associated with at least four channels are each recorded in recording areas separate from those for video signals.

Multichannel audio signals carried by at least four channels do not necessarily take on the same degree of importance on every channel. For example, consider a four audio channel set-up that provides a stereo sound and dual language capability. In this set-up, the first and the second channels are typically assigned the primary language transmission or the primary stereo sound signals (say on two front channels), while the third and the fourth channels accommodate the secondary language transmission or the secondary stereo sound signals (on two rear channels). Thus not all channels assume the same importance.

With the above point taken into account, there is preferential recording of the important audio signals on the primary channels in those recording areas of the tape in which drop-outs are minimal.

The higher the priority for a channel group, the farther the audio signal corresponding to that channel group is recorded away from either tape edge in the longitudinal direction of each track. The farther away from the tape edge, the more stabilized the contact between tape and rotating head. Thus the audio signal for a channel of higher priority is picked up by the corresponding head in a more stable manner and hence entails less degradation in sound quality during reproduction.

The invention will now be described by way of example with reference to the accompanying drawings, throughout which like parts are referred to by like references, and in which:
Figure 1 is a view showing a recording track pattern in connection with a recording apparatus and method embodying the invention;
Figure 2 is a timing chart depicting how the apparatus and method of Figure 1 work;
Figure 3 is a tabular representation of how HDTV signal audio modes are arranged in the so-called MUSE method;
Figure 4 is a block diagram of a recording apparatus;
Figure 5 is a waveform view indicating how the apparatus of Figure 4 works;
Figure 6 is a block diagram of a reproducing apparatus;
Figure 7 is a view of a rotating head for use with the apparatus of Figure 4;
Figure 8 is a view of a recording track pattern formed by the rotating head of Figure 7; and
Figure 9 is a view showing how video and audio signal recording means are typically arranged on the tape.

One preferred embodiment of the present invention will now be described. The embodiment involves applying the invention to an HDTV VTR that turns 4 -channel audio signals into PCM audio signals and records them onto a magnetic tape along with the corresponding video signals.

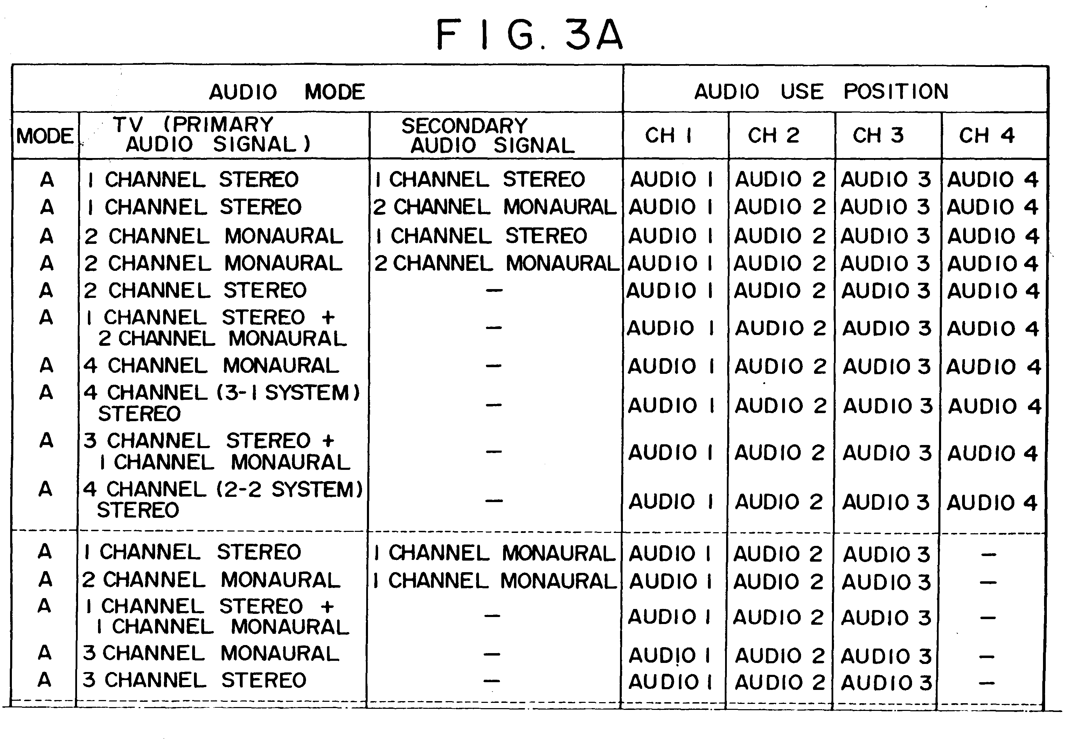

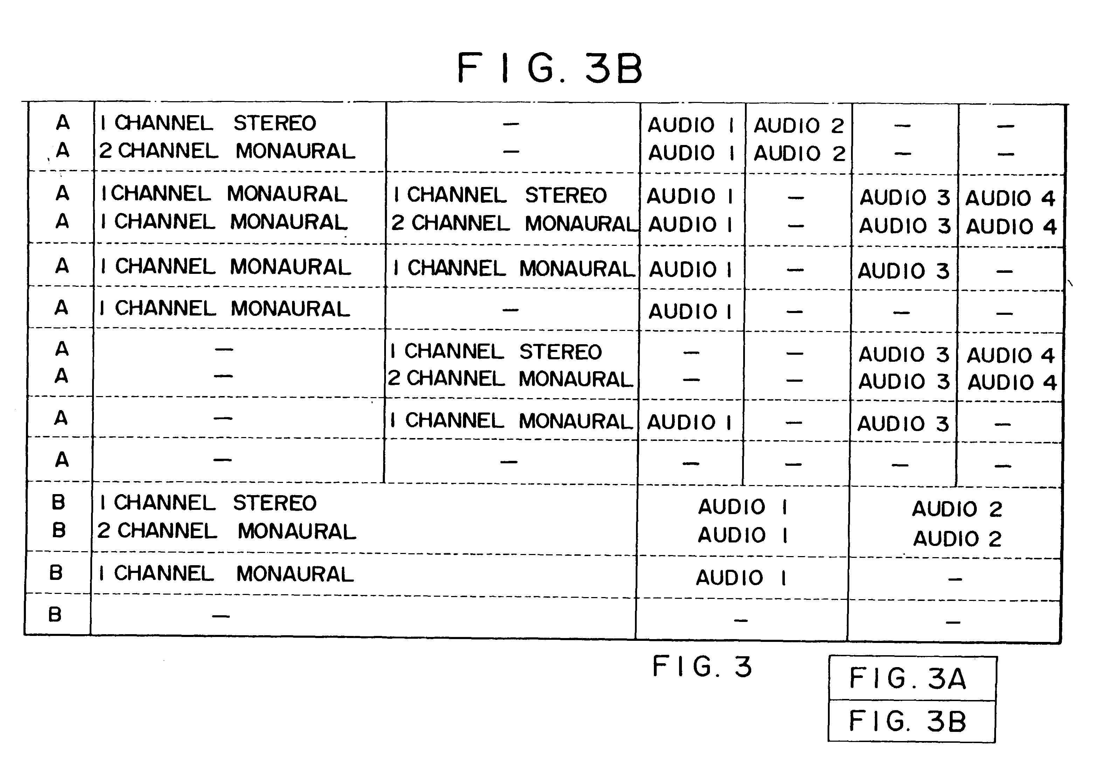

Figure 3 shows how the audio modes are typically arranged in the MUSE (multiple sub-nyquist sampling encoding) method, a representative method of HDTV broadcasting. The audio data broadcast using the MUSE method is a main source of audio data for HDTV VTRs.

As indicated in Figure 3, in most of the audio modes for A mode stereo HDTV broadcasting using the MUSE method, the primary audio data are concentrated on a first channel CH1 and a second channel CH2. In a four-channel stereo sound set-up, the primary audio data are also assigned to the first and the second channels CH1 and CH2 (front right and left channels).

As described, of the audio data on four channels, the primary audio data are carried by the first and the second channels CH1 and CH2. In this case, the primary audio data on the first and the second channels CH1 and CH2 are recorded in recording areas away from both ends of each track in the longitudinal direction. Those recording areas are characterized by their low error rates in the track pattern on the tape.

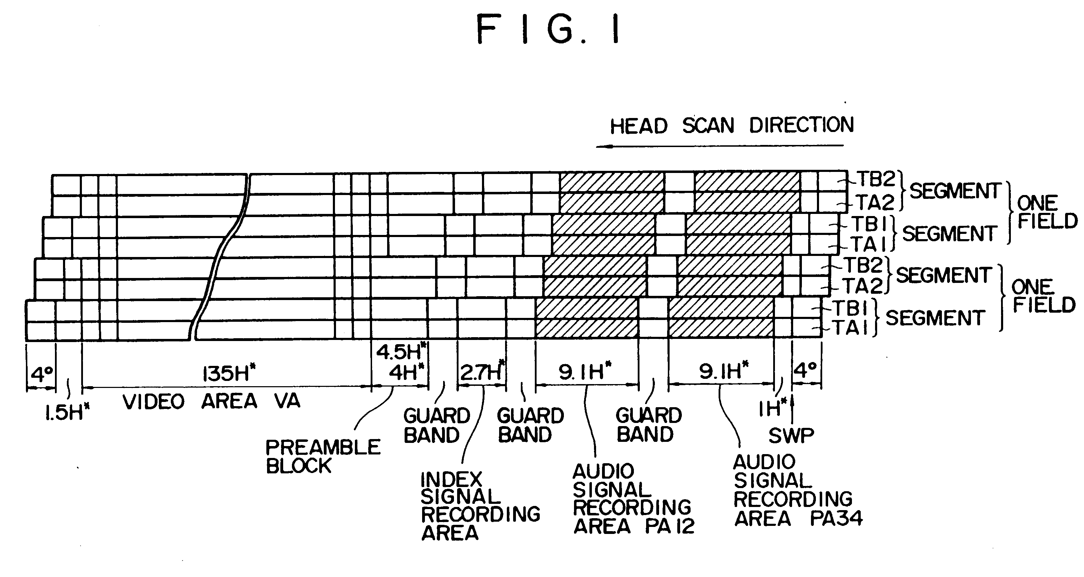

Figure 1 depicts a typical recording track pattern on the tape, the pattern being produced by the rotating device of Figure 7 in the apparatus on which the invention is practised.

As with the arrangement of Figure 9A, the example of Figure 1 involves having the rotating head device form PCM audio signal recording areas on the track scan starting side of the tape. In the example of Figure 1, two separate audio signal recording areas, shaded with slashes, are provided. One PCM audio signal recording area PA12 is associated with the first and the second channels CH1 and CH2, and the other PCM audio recording area PA34 with the third and fourth channels CH3 and CH4. The PCM audio signal recording area PA12 for the first and the second channels is assigned a tape region farther away from the head scan starting end of tracks than the PCM audio signal recording area PA34 for the third and the fourth channels. This allows the contact between head and tape to be more stable in the recording area PA12 than in the area PA34.

The track pattern example of Figure 1 will now be described in more detail.

Both ends of the tracks TA1, TB1, TA2 and TB2 corresponding to a rotation angle of four degrees constitute blocks each for overlapping track scan by the rotating heads 1A, 1B, 2A and 2B. Immediately following the over-lapping block comes a head switching point SWP between the pair of rotating heads 1A, 1B, and the pair of rotating heads 2A, 2B. When viewed in the head scanning direction, a 1H* block (H* is the horizontal portion of a recording signal ) represents a margin block for head switchover. A 9.1H* block that follows stands for the PCM audio signal recording area PA34 for the third and fourth channels. After the recording area PA34 illustratively comes a guard band of 1.7H*. The guard band is in turn followed by the PCM audio signal recording area PA12 for the first and the second channels. After the recording area PA12 comes another guard band of 1.7H* followed by an index signal recording area of 2.7H*. After the index signal recording area comes yet another guard band of 1.7H* followed by a video signal preamble block of 4H* (or 4.5H*). A 135H* area following the preamble block is a video signal recording area VA. The preamble block at least accommodates a CW signal (continuous wave signal for PLL synchronization), a segment synchronization signal, a reference level signal and a ramp signal.

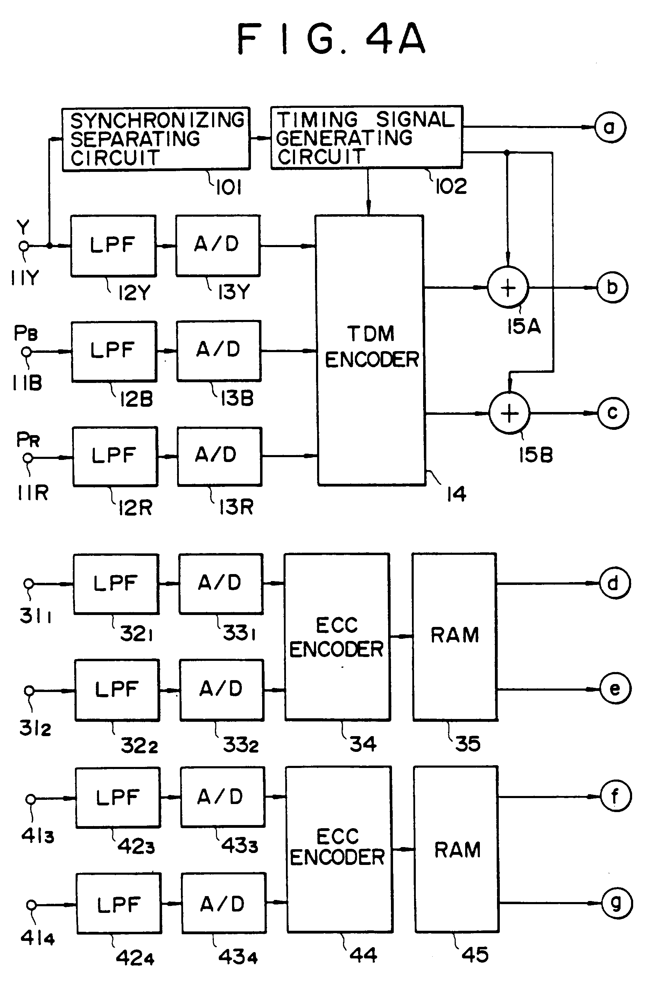

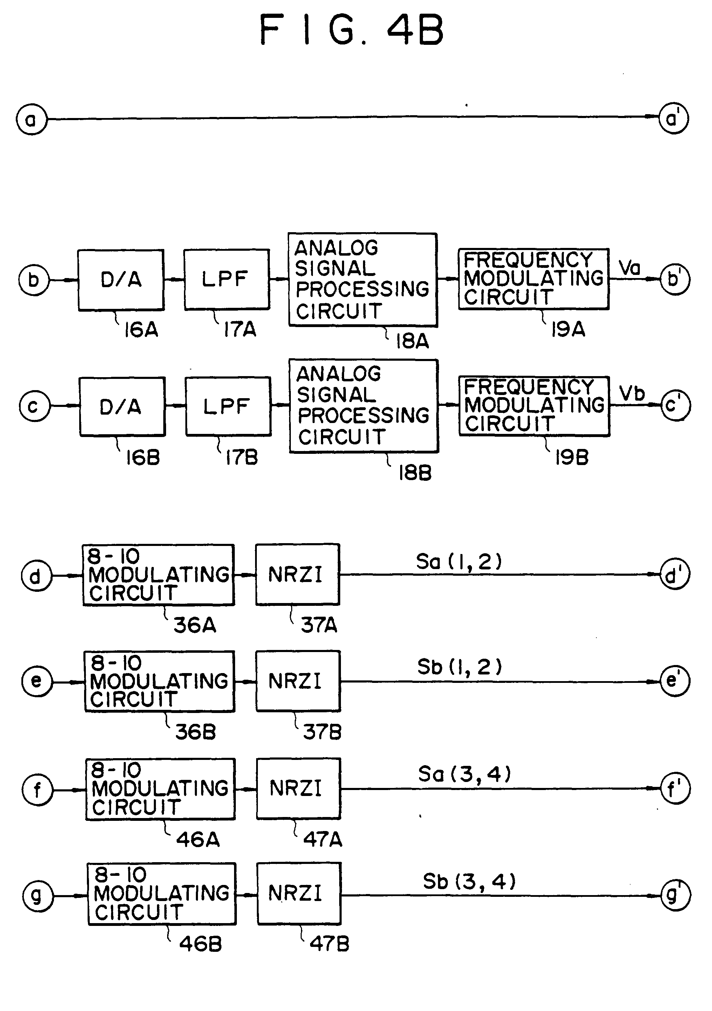

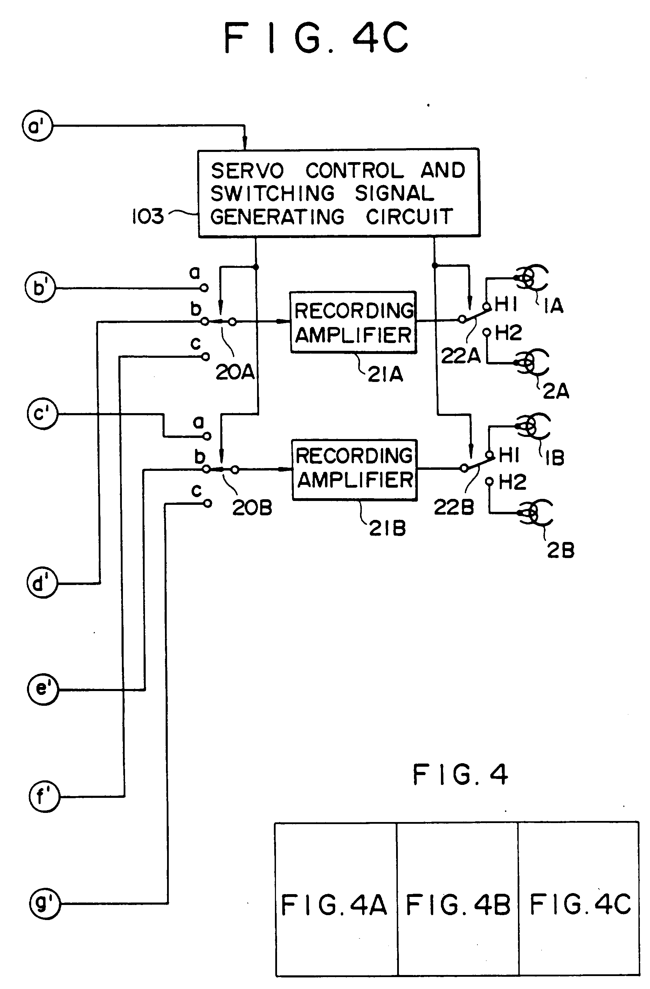

Figure 4 is a block diagram of a typical HDTV signal recording apparatus on which the invention is practised.

In Figure 4, a luminance signal Y coming in through an input terminal 11Y is supplied to an A/D converter 13Y via a low-pass filter 12Y. The luminance signal Y is converted from analogue to digital format at a sampling frequency of 4.55 MHz before being supplied to a time division multiplex (TDM) encoder 14. A blue colour difference signal P_{B} and a red colour difference signal P_{R} come in through input terminals 11B and 11R, respectively. The colour difference signals P_{B} and P_{R} are supplied to A/D converters 13B and 13R via low-pass filters 12B and 12R. The two signals are converted from analogue to digital format at a sampling frequency of 11.1375 MHz before being supplied to the TDM encoder 14. The TDM encoder 14 provides digital signal processing such as time base handling and linear sequencing of colour signals. In doing so, the TDM encoder 14 arranges the incoming signals onto two channels A and B. Adders 15A and 15B supply the signal on each channel with a synchronizing signal SYNC (different from that contained in the video signal) and a burst signal SB. The synchronizing signal SYNC and burst signal SB are generated by a timing signal generating circuit 102 that comprises a phase locked loop (PLL) arrangement. A synchronizing separating circuit 101 supplies the timing signal generating circuit 102 with a synchronizing signal that was separated from the input luminance signal Y. The pLL output clock of the timing signal generating circuit 102 maintains a constant phase relation with this synchronizing signal. Furthermore, the timing signal generating circuit 102 supplies the TDM encoder 14 with clock pulses and sends a timing signal to a servo control and switching signal generating circuit 103, to be described later.

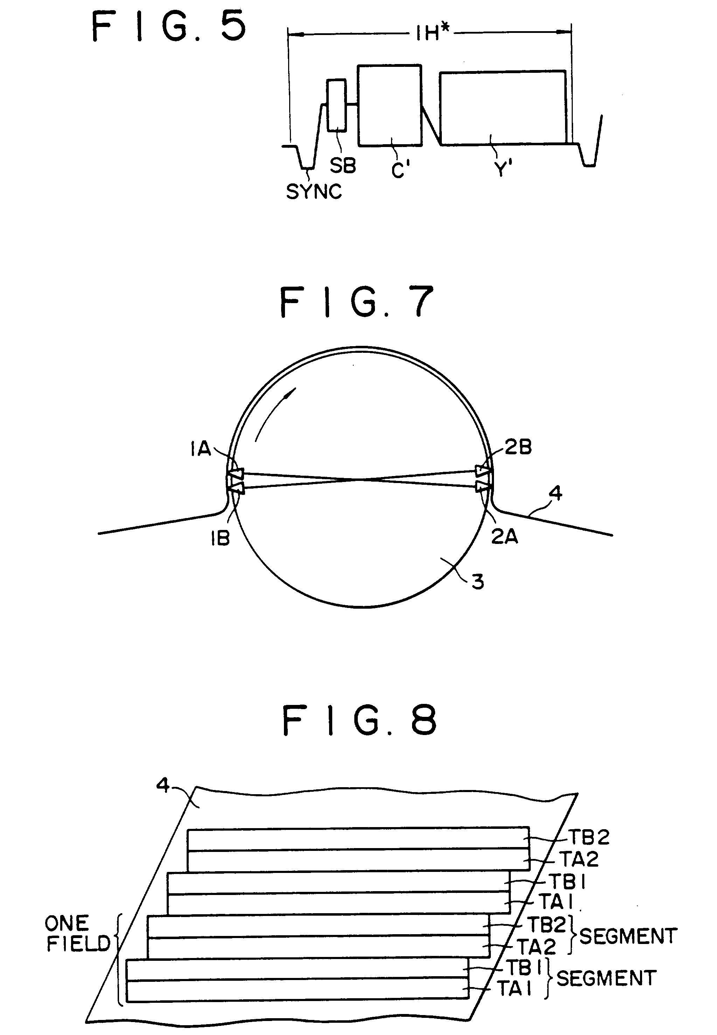

The outputs of the adders 15A and 15B are fed to D/A converters 16A and 16B for conversion from digital to analogue format. The D/A converters 16A and 16B each generate a TDM waveform signal that contains the synchronizing signal SYNC, the burst signal SB, a colour signal C′ and a luminance signal Y′, as shown in Figure 5. As mentioned above, the symbol H* represents one horizontal period of the recording signal, that is, the TDM signal.

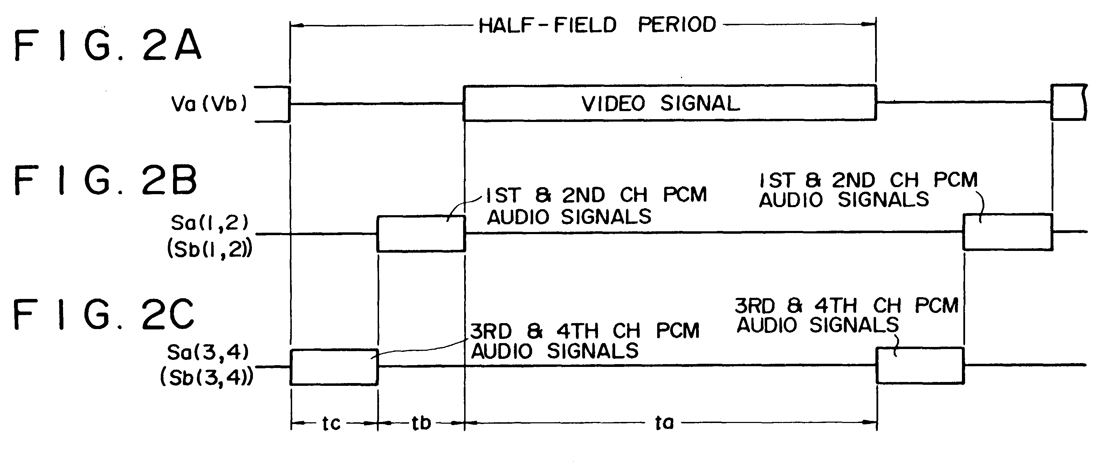

The TDM waveform signals are supplied via low-pass filters 17A and 17B to analogue processing circuits 18A and 18B for pre-emphasis and other processing. Thereafter, the signals are supplied to FM circuits 19A and 19B for frequency modulation. The FM circuit 19A supplies an FM video signal Va (see Figure 2A) on the A channel to a first input terminal "a" of a switching circuit 20A. The FM circuit 19B supplies an FM video signal Vb (see Figure 2A) on the B channel to the first input terminal of a switching circuit 20B.

Meanwhile, the audio signals on four channels are arranged into a first and a second group. The first group is associated with the first and the second channels, and the second group with the third and the fourth channels. The first and the second channel audio signals are supplied to A/D converters 33₁ and 33₂ via input terminals 31₁ and 31₂ and low-pass filters 32₁ and 32₂, respectively. Each audio signal is converted to digital audio data of sixteen bits per second. The digital audio data are supplied to an ECC encoder 34. The ECC encoder 34 subjects the first and the second channel audio signals as a whole to interleaving and error correction encoding. For the processing, sixteen bits of data per sample are divided into high-order eight bits and low-order eight bits. It is in units of the 8-bit sample data that the first and the second channel audio signals are handled.

The output of the ECC encoder 34 passes through a RAM 35 and divides into A channel data and B channel data. The A and the B channel data are supplied respectively to 8-10 modulating circuits 36A and 36B for 8-to-10 bit conversion. After the conversion, the data are supplied to NRZI modulating circuits 37A and 37B which generate NRZI signals. The A channel signal Sa(1, 2) (see Figure 2B) of the first and the second channel PCM audio data from the modulating circuit 37A is supplied to an input terminal "b" of the switching circuit 20A; the B channel signal Sb(1, 2) (see Figure 2B) of the first and the second channel PCM audio data from the modulating circuit 37B is fed to the input terminal "b" of the switching circuit 20B.

The third and the fourth channel audio signals of the second group are supplied respectively to A/D converters 43₃ and 43₄ via input terminals 41₃ and 41₄ and low-pass filters 42₃ and 42₄. Each audio signal is converted to digital audio data of sixteen bits per sample. The digital audio data are supplied to an ECC encoder 44. The ECC encoder 44 subjects the third and the fourth channel audio signals as a whole to interleaving and error correction encoding, as in the case of the first and the second channel audio signals.

The output of the ECC encoder 44 passes through a RAM 45 and divides into A channel data and B channel data. The A and the B channel data are supplied respectively to 8-10 modulating circuits 46A and 46B for 8-to-10 bit conversion. After the conversion, the data are supplied to NRZI modulating circuits 47A and 47B which generate NRZI signals. The A channel signal Sa(3, 4) (see Figure 2C) of the third and the fourth channel PCM audio data from the modulating circuit 47A is supplied to an input terminal "c" of the switching circuit 20A; the B channel signal Sb(3, 4) (see Figure 2C) of the third and the fourth channel PCM audio data from the modulating circuit 47B is fed to the input terminal "c" of the switching circuit 20B.

A switching signal from the servo control and switching signal generating circuit 103 operates the switching circuits 20A and 208 within a 180-degree area (corresponding to a half-field period) on the tape scanned by the pair of rotating heads 1A, 1B or 2A, 2B. The switching operation takes place as follows:

A period tc in Figure 2 corresponds to the tape area scanned by the rotating heads 1A, 1B or 2A, 2B from a track scan start point to the end of the PCM audio signal recording area PA34. During the period tc, the switching circuits 20A and 20B are each set to the input terminal "c". As shown in Figure 2C, the switching circuits 20A and 20B yield the PCM audio data Sa(3, 4) and Sb(3, 4) for the third and the fourth channels.

A period tb in Figure 2 corresponds to the tape area scanned by the rotating heads 1A, 1B or 2A, 2B throughout the PCM audio signal recording area PA12. During the period tb, the switching circuits 20A and 20B are each set to the input terminal "b". As shown in Figure 2B, the switching circuits 20A and 20B provides the PCM audio data Sa(1, 2) and Sb(1, 2) for the first and the second channels.

A period ta in Figure 2 corresponds to the tape area scanned by the rotating heads 1A, 1B or 2A, 2B following the PCM audio signal recording area PA12. During the period ta, the switching circuits 20A and 20B are each set to the input terminal "a". As illustrated in Figure 2A, the switching circuits 20A and 20B produce the recording video signals Va and Vb for the A and the B channels.

The output signals from the switching circuits 20A and 20B pass through respective recording amplifiers 21A and 21B and through head switching circuits 22A and 22B before being supplied to the rotating heads 1A, 1B or 2A, 2B. Given a head switching signal from the servo control and switching signal generating circuit 102, the head switching circuits 22A and 22B are each set to a terminal H1 over a 180-degree area where the heads 1A and 1B contact the tape; the switching circuits 22A and 22B are each set to a terminal H2 over a 180-degree area where the heads 2A and 2B contact the tape.

As described, when the heads 1A and 1B form the tracks TA1 and TB1 in a substantially simultaneous manner, the third and the fourth channel audio data are recorded in the PCM audio signal recording area PA34 across the two tracks TA1 and TB1. Likewise, the first and the second channel audio data Sa(1, 2) are recorded in the PCM audio signal recording area PA12 across the tracks TA1 and TB1. In the video signal recording area Va, the recording video signal of a half field is recorded across the tracks TA1 and TB1

In the same manner, the heads 2A and 2B record the first to fourth channel PCM audio data and the recording video signal of another half field across the tracks TA2 and TB2.

After the above-described recording of the data, the first and the second channel audio data of primary importance are recorded in the recording area PA12, farther away longitudinally from the ends of the recording tracks TA1, TB1, TA2 and TB2 than the third and the fourth channel audio data of secondary importance. Since the rotating heads 1A, 1B, 2A and 2B maintain more stable contact with the tape in the recording area PA12 than in the recording area PA34, the error rate is the lower in the area PA12. Thus, during reproduction, the degradation in sound quality on the first and the second channels is minimized.

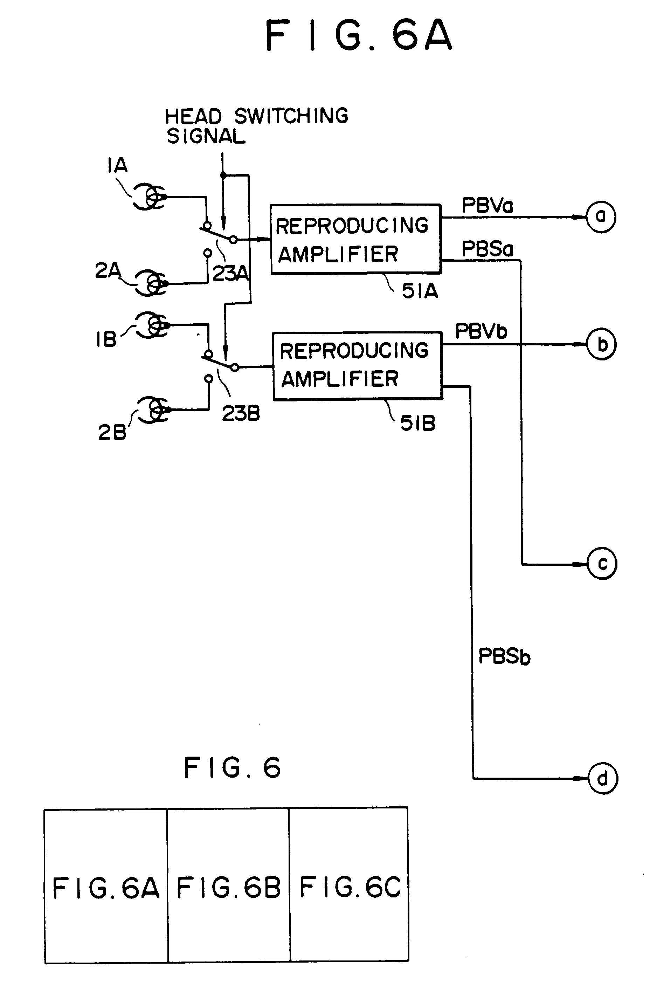

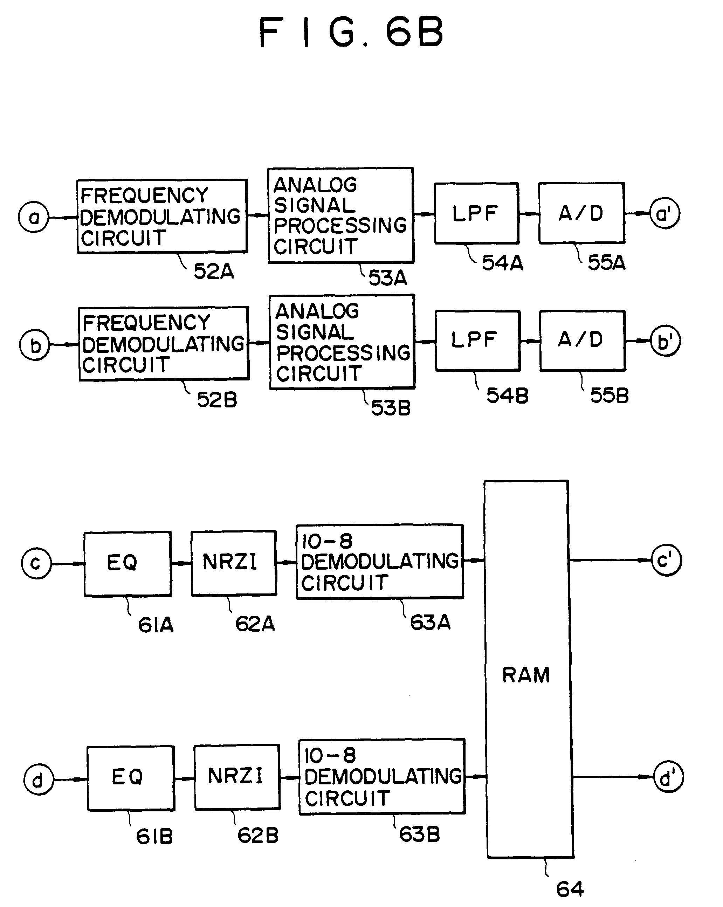

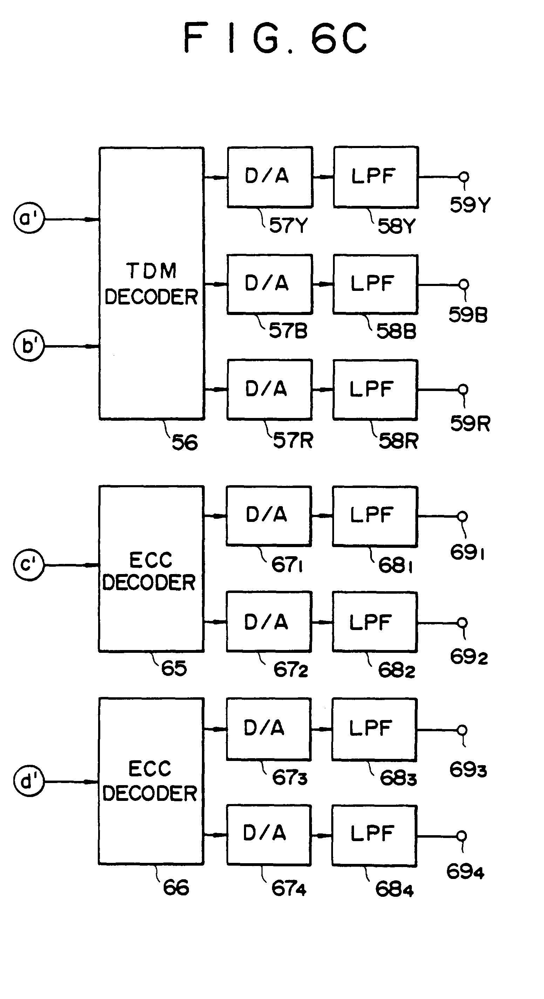

Figure 6 is a block diagram of a reproducing apparatus on which the invention is practised. This apparatus reproduces video and audio signals from the tape on which the video and audio data were recorded as described above.

A head switching circuit 23A alternately selects the rotating head 1A or 2A for each 180-degree rotation angle block in which the current head contacts the tape. This operation allows the head switching circuit 23A to produce an A channel reproduced signal which is supplied to a reproducing amplifier 51A. Similarly, a head switching circuit 23B alternately selects the rotating head 1B or 2B. The switching circuit 23A then produces a B channel reproduced signal which is supplied to a reproducing amplifier 51B.

The reproducing amplifier 51A produces an A channel reproduced video signal PBVa and an A channel reproduced PCM audio signal PBSa. The signal PBVa comes from the video area VA of the tracks TA1 and TA2, and the signal PBSa from the PCM audio signal recording areas PA34 and PA12. The reproducing amplifier 51B provides a B channel reproduced video signal PBVb and a B channel reproduced PCM audio signal PBSb. The signal PBVb comes from the video area VA of the tracks TB1 and TB2, and the signal PBSb from the PCM audio signal recording areas PA34 and PA12 of the same tracks TB1 and TB2.

The A and the B channel reproduced video signals PBVa and PBVb from the reproducing amplifiers 51A and 51B are frequency demodulated by frequency demodulating circuits 52A and 52B. The demodulated signals are supplied to analogue processing circuits 53A and 53B for de-emphasis and other analogue processing. The output signals from the analogue processing circuits 53A and 53B pass respectively through low-pass filters 54A and 54B to A/D converters 55A and 55B for conversion to digital format. The converted signals are supplied to a TDM decoder 56. The TDM decoder 56 converts the received TDM signals back to the initially input set of the luminance signal and the blue and red colour difference signals.

The luminance signal from the TDM decoder 56 is converted back to the initial analogue format by a D/A converter 57Y and a low-pass filter 58Y. Then the reproduced luminance signal appears at an output terminal 59Y.

The blue and red colour signals from the PCM decoders 56 are converted back to their initial analogue format by D/A converters 57B and 57R and low-pass filters 58B and 58R, respectively. The reproduced blue and red colour difference signals appear at output terminals 59B and 59R, respectively.

The A and the B channel reproduced PCM audio data PBSa and PBSb from the reproducing amplifiers 51A and 51B pass respectively through reproducing equalizers 61A and 61B and enter NRZI decoding circuits 62A and 62B for decoding. The decoded data are demodulated by 10-8 demodulating circuits 63A and 63B for conversion to eight bits per sample. The output data of the 10-8 demodulating circuits 63A and 63B pass through a RAM 64 and divide into two groups of audio data; one for the first and the second channels, and the other for the third and the fourth channels. The first and the second channel audio data are supplied to an ECC decoder 65, and the third and the fourth channel audio data are fed to an ECC decoder 66. The ECC decoders 65 and 66 decode the respective audio data back to their initial first to fourth channel data in the initial sampling order. Errors found in the data are corrected by the ECC decoders 65 and 66. If any error is found to be uncorrectable, the matching correct data are used to bypass the error through interpolation. In this case, the first and the second channel audio data come from the area PA12 where the contact between tape and rotating head is relatively stable. Thus the first and the second channel audio data contain far fewer errors than the third and the fourth channel audio data.

The ECC decoder 65 generates the first and the second channel audio data that are converted back to their initial analogue format by D/A converters 67₁ and 67₂ and by low-pass filters 68₁ and 68₂. After conversion, the analogue audio signals appear at output terminals 69₁ and 69₂.

The ECC decoder 66 produces the third and the fourth channel audio data that are converted back to their initial analogue format by D/A converters 67₃ and 67₄ and by low-pass filters 68₃ and 68₄. After conversion, the analogue audio signals appear at output terminals 69₃ and 69₄.

In the above set-up, the recording track pattern of Figure 1 need not be obtained with the rotating head device of Figure 7. Any other suitable device may be used to form the necessary track pattern.

The above set-up involves handling audio signals on four channels. Alternative set-ups may handle audio signals on more than four channels.

As described and according to the invention, audio signals carried by at least four channels are given priorities for preferential recording onto tape blocks starting from the tape end. The higher the priority of audio data, the farther away is the recording position therefor from the tape end; the farther away from the tape end, the more stable is the contact between tape and rotating head. This arrangement permits significantly fewer errors to occur in the audio data of high priority channels than in the data of other channels, whereby audio signals of higher sound quality are made available as a whole.

## Claims

1. An audio signal recording method for use with video tape recorders, said method comprising the steps of:
having a plurality of rotating heads (1, 2) simultaneously scan a tape (4) consecutively to form as many oblique recording tracks on said tape (4) as said plurality of rotating heads (1, 2) with no guard band between said tracks, said plurality of oblique recording tracks constituting one segment;
recording, for each segment, a video signal corresponding to unit time in a video signal recording area; and
recording, for each segment, the PCM audio signal of at least four channels corresponding to said video signal in an audio signal recording area separate from said video signal recording area;
said video and said audio signals being recorded in the longitudinal direction of each of said recording tracks;
said PCM audio signals of at least four channels being clustered into a plurality of channel groups each channel group associated with a plurality of said channels;
said audio signal recording area being divided into as many areas as channel groups in the longitudinal direction of each of said tracks; and
for each segment the audio data for each of said channel groups being recorded in a distributed manner across said plurality of oblique recording tracks of the segment;
characterised in that each channel group of said plurality of channel groups is given a priority in the order of the importance of the audio data of the channel group, the audio data of the channel group of the highest priority being recorded in the recording area located further away from the longitudinal ends of each of said oblique recording track than the audio data of a channel group of a lower priority.

2. A method according to claim 1 wherein said video tape recorders for use with said method are designed to record and reproduce high definition TV signals.

3. A method according to claim 2 wherein said high definition TV signals are broadcast using a multiple sub-nyquist sampling encoding method.

4. An audio signal recording apparatus for recording main PCM audio signals, sub PCM audio signals and video signals in respective recording areas on oblique recording tracks on a video tape (4), said apparatus comprising:
a video signal processing circuit (14) for processing incoming video signals into suitable signal form for recording;
a main audio PCM processing circuit (34) for processing incoming main audio signals into said main PCM audio signals suitable for recording;
a sub audio PCM processing circuit (44) for processing incoming sub audio signals into said sub PCM audio signals suitable for recording; and
rotary magnetic head means (1, 2) for recording the oblique recording tracks on the video tape (4);
characterised in that on each recording track the recording area of said main PCM audio signals is positioned between the respective recording areas of said video signals and said sub PCM audio signals of the same recording track.

5. Apparatus according to claim 4 wherein said video tape (4) is guided about 180 degrees around a tape guide drum (3) and said rotary magnetic head means (1, 2) records two parallel tracks simultaneously on said video tape (4).

6. Apparatus according to claim 5 wherein said rotary magnetic head means (1, 2) includes first and second pairs of magnetic heads (1A, 1B; 2A, 2B), the first pair of magnetic heads (1A, 1B) being spaced from the second pair of magnetic heads (2A, 2B) by 180 degrees.

7. Apparatus according to claim 6 wherein said main PCM audio signals include two channels of audio signals, and said sub PCM audio signals include two channels of audio signals.

## Patentansprüche

1. Tonsignal-Aufzeichenverfahren, das mit Videobandgeräten verwendet wird, wobei das Verfahren folgende Schritte enthält:
Vorsehen einer Vielzahl von rotierenden Köpfen (1, 2), die ein Band (4) der Reihe nach gleichzeitig abtasten, um soviele schräge Aufzeichenspuren auf dem Band (4) auszubilden, als rotierende Köpfe (1, 2) vorhanden sind, wobei zwischen den Spuren kein Sicherheitsband liegt, wobei die Vielzahl von schrägen Aufzeichenspuren ein Segment bildet;
Aufzeichnen für jedes Segment von einem Videosignal, das einer Zeiteinheit entspricht, in einem Videosignal-Aufzeichenbereich ; und
Aufzeichnen für jedes Segment von einem PCM-Tonsignal mit zumindest vier Kanälen, das dem Videosignal entspricht, in einem Tonsignal-Aufzeichenbereich, der vom Videosignal-Aufzeichenbereich getrennt ist;
wobei die Video- und Tonsignale in Längsrichtung einer jeden Aufzeichenspur aufgezeichnet werden;
wobei die PCM-Tonsignale von zumindest vier Kanälen in eine Vielzahl von Kanalgruppen zusammengeballt werden, wobei jede Kanalgruppe einer Vielzahl der Kanäle zugeordnet wird;
wobei der Tonsignal-Aufzeichenbereich in Längsrichtung einer jeden Spur in soviele Bereiche geteilt wird, als es Kanalgruppen gibt; und
wobei für jedes Segment die Tondaten einer jeden Kanalgruppe auf die Vielzahl von schrägen Aufzeichenspuren des Segments verteilt aufgezeichnet werden;
dadurch gekennzeichnet, daß jeder der vielen Kanalgruppen eine Priorität in der Größe der Bedeutung der Tondaten der Kanalgruppe verliehen wird, wobei die Tondaten der Kanalgruppe mit der höchsten Priorität in jenem Aufzeichenbereich aufgezeichnet werden, der von den Längsenden einer jeden schrägen Aufzeichenspur weiter entfernt angeordnet ist, als dies bei Tondaten einer Kanalgruppe mit geringerer Priorität der Fall ist.

2. Verfahren gemäß Anspruch 1, dadurch gekennzeichnet, daß die Videobandgeräte, bei denen dieses Verfahren verwendet wird, so aufgebaut sind, um hochzeilige Fernsehsignale (HDTV-Signale) aufzuzeichnen und wiederzugeben.

3. Verfahren gemäß Anspruch 2, dadurch gekennzeichnet, daß die hochzeiligen Fernsehsignale unter Verwendung eines mehrfachen Sub-Nyquist-Abtast/ Kodier-Verfahrens gesendet werden.

4. Tonsignal-Aufzeichengerät, um PCM-Haupttonsignale, PCM-Subtonsignale sowie Videosignale in entsprechenden Aufzeichenbereichen in schrägen Aufzeichenspuren auf einem Videoband (4) aufzuzeichnen, wobei das Gerät enthält:
eine Videosignal-Verarbeitungsstufe (14), um ankommende Videosignale in eine geeignete Signalform für eine Aufzeichnung zu verarbeiten;
eine PCM-Haupttonsignal-Verarbeitungsstufe (34), um ankommende Haupttonsignale in die PCM-Haupttonsignale zu verarbeiten, die für eine Aufzeichnung geeignet sind;
eine PCM-Subtonsignal-Verarbeitungsstufe (44), um ankommende Subtonsignale in die PCM-Subtonsignale zu verarbeiten, die für eine Aufzeichnung geeignet sind; und
eine rotierende Magnetkopfeinrichtung (1, 2), um auf dem Videoband (4) die schrägen Aufzeichenspuren aufzuzeichnen;
dadurch gekennzeichnet, daß in jeder Aufzeichenspur der Aufzeichenbereich der PCM-Haupttonsignale zwischen den entsprechenden Aufzeichenbereichen der Videosignale und der PCM-Subtonsignale derselben Aufzeichenspur angeordnet ist.

5. Gerät gemäß Anspruch 4, dadurch gekennzeichnet, daß das Videoband (4) um etwa 180° um eine Bandführungstrommel (3) geführt wird, wobei die rotierende Magnetkopfeinrichtung (1, 2) auf dem Videoband (4) gleichzeitig zwei parallele Spuren aufzeichnet.

6. Gerät gemäß Anspruch 5, dadurch gekennzeichnet, daß die rotierende Magnetkopfeinrichtung (1, 2) ein erstes und zweites Paar von Magnetköpfen (1A, 1B; 2A, 2B) aufweist, wobei das erste Paar von Magnetköpfen (1A, 1B) vom zweiten Paar von Magnetköpfen (2A, 2B) um 180° beabstandet ist.

7. Gerät gemäß Anspruch 6, dadurch gekennzeichnet, daß die PCM-Haupttonsignale zwei Kanäle von Tonsignalen aufweisen, und daß die PCM-Subtonsignale zwei Kanäle von Tonsignalen aufweisen.

## Revendications

1. Procédé d'enregistrement de signaux audio destiné à être utilisé avec des dispositifs d'enregistrement sur bande vidéo, ledit procédé comprenant les opérations suivantes :
faire simultanément balayer, par une pluralité de têtes rotatives (1, 2), une bande (4) consécutivement afin de former autant de pistes d'enregistrement obliques sur ladite bande (4) qu'il y a de têtes rotatives (1, 2) sans bande de garde entre lesdites pistes, ladite pluralité de pistes d'enregistrement obliques constituant un segment ;
enregistrer, pour chaque segment, un signal vidéo correspondant à un temps unité dans une zone d'enregistrement de signaux vidéo ; et
enregistrer, pour chaque segment, le signal audio PCM, c'est-à-dire modulé par impulsions codées, d'au moins quatre canaux correspondant audit signal vidéo dans une zone d'enregistrement de signaux audio qui est distincte de ladite zone d'enregistrement de signaux vidéo ;
lesdits signaux vidéo et audio étant enregistrés suivant la direction longitudinale de chacune desdites pistes d'enregistrement ;
lesdits signaux audio PCM d'au moins quatre canaux étant agglomérés en une pluralité de groupes de canaux, chaque groupe de canaux étant associé à une pluralité desdits canaux ;
ladite zone d'enregistrement de signaux audio étant divisée en autant de zones qu'il y a de groupes de canaux suivant la direction longitudinale de chacune desdites pistes ; et
pour chaque segment, les données audio relatives à chacun desdits groupes de canaux étant enregistrées d'une manière répartie sur ladite pluralité de pistes d'enregistrement obliques du segment ;
caractérisé en ce que chaque groupe de canaux de ladite pluralité de groupes de canaux reçoit une priorité suivant l'ordre de l'importance des données audio du groupe de canaux, les données audio du groupe de canaux de la priorité la plus élevée étant enregistrées dans la zone d'enregistrement située plus loin des extrémités longitudinales de chacune desdites pistes d'enregistrement obliques que les données audio d'un groupe de canaux d'une priorité inférieure.

2. Procédé selon la revendication 1, où lesdits dispositifs d'enregistrement sur bande vidéo destinés à être utilisés avec ledit procédé sont conçus pour enregistrer et reproduire des signaux de télévision du type haute définition.

3. Procédé selon la revendication 2, où lesdits signaux de télévision du type haute définition sont diffusés à l'aide d'un procédé de codage par échantillonnage en dessous de la cadence minimale multiple.

4. Appareil d'enregistrement de signaux audio destiné à enregistrer des signaux audio PCM principaux, des signaux audio PCM auxiliaires et des signaux vidéo dans des zones d'enregistrement respectives sur des pistes d'enregistrement obliques d'une bande vidéo (4), ledit appareil comprenant :
un circuit de traitement de signaux vidéo (14) servant à traiter des signaux vidéo entrants pour les mettre sous une forme appropriée à l'enregistrement ;
un circuit de traitement PCM audio principal (34) servant à traiter des signaux audio principaux entrants pour les mettre sous la forme desdits signaux audio PCM principaux convenant pour l'enregistrement ;
un circuit de traitement PCM audio auxiliaire (44) servant à traiter des signaux audio auxiliaires entrants pour les mettre sous la forme desdits signaux audio PCM auxiliaires convenant pour l'enregistrement ; et
des moyens à tête magnétique rotative (1, 2) servant à enregistrer les pistes d'enregistrement obliques sur la bande vidéo (4) ;
caractérisé en ce que, sur chaque piste d'enregistrement, la zone d'enregistrement desdits signaux audio PCM principaux est positionnée entre les zones d'enregistrement respectives desdits signaux vidéo et desdits signaux audio PCM auxiliaires de la même piste d'enregistrement.

5. Appareil selon la revendication 4, où ladite bande vidéo (4) est guidée sur environ 180°C autour d'un tambour de guidage de bande (3) et lesdits moyens à tête magnétique rotative (1, 2) enregistrent simultanément deux pistes parallèles sur ladite bande vidéo (4).

6. Appareil selon la revendication 5, où lesdits moyens à tête magnétique rotative (1, 2) comportent des première et deuxième paires de têtes magnétiques (1A, 1B ; 2A, 2B), la première paire de têtes magnétiques (1A, 1B) étant séparée de 180°C par rapport à la deuxième paire de têtes magnétiques (2A, 2B).

7. Appareil selon la revendication 6, où lesdits signaux audio PCM principaux comportent deux canaux de signaux audio, et lesdits signaux audio PCM auxiliaires comportent deux canaux de signaux audio.
